# FASCICULE DE BREVET EUROPEEN

(11) **EP 1 671 878 B1**
(45) Date de publication et mention de la délivrance du brevet: **11.06.2008**
(21) Numéro de dépôt: 05380131.2
(22) Date de dépôt: 17.06.2005
(51) Int. Cl.: B62K 25/02, B62K 19/30

(54) **Patte arrière pour bicyclette**
Ende einer Hinterradgabel für ein Fahrrad
Bicycle rear fork end

(30) Priorité: 15.12.2004 ES 200402977
(43) Date de publication de la demande: 21.06.2006
(73) Titulaire: Orbea, S. Coop. Ltda., 48269 Mallabia (Bizkaia) (ES)
(72) Inventeur: Argote Vivar, José Ignacio, 48269 Mallabia (Bizkaia) (ES)
(74) Mandataire: Urizar Barandiaran, Miguel Angel

(56) Documents cités:
- EP-A- 1 479 602
- DE-A1- 10 200 568

## Description

Chez les fabricants, on connaît sous le nom de "patte arrière" l'assemblage entre chaque longeron-base et le tube correspondant du cadre.

Le moyeu arrière de la bicyclette prend appui sur la patte arrière.

Les pattes arrière ont été conçues en tenant compte de l'accouplement de différents accessoires de la bicyclette, tels que les freins à disque, le support, la grille, la patte changeable, etc...

Pour bien ajuster la chaîne sur l'assemblage de la bicyclette, non seulement le nombre de maillons de la chaîne est crucial (s'il y a trop de maillons, la chaîne est lâche, tandis que s'il n'y en a pas assez, la chaîne ne ne peut pas englober le plateau et les pignons en même temps), mais il faut également un second type de réglage, étant donné qu'un nombre correct de maillons sur la chaîne n'est pas suffisant pour obtenir un bon réglage (parce qu'il peut arriver qu'avec "n" mailllons, la chaîne soit trop courte et avec "n + 1 " maillons trop longue).

Ce deuxième type de réglage de la chaîne peut être être fait au moyen d'un tendeur de chaîne, qui est incorporé dans le dérailleur ou au moyen d'une entrée horizontale dans la patte, de sorte que la roue puisse être ajustée dans différentes positions.

Par conséquent, une fois que l'on sait comment ajuster la chaîne de la bicyclette, les pattes existantes peuvent être classées en deux types :
a) avec une entrée verticale (comportant un tendeur de chaîne)
b) avec une entrée horizontale, de sorte que la roue puisse s'ajuster dans différentes positions

Dans l'état actuel de la technique, on connaît déjà des pattes ayant une entrée horizontale (que possèdent généralement les bicyclettes monovitesse et dérailleur du type Nexus à utiliser de préférence en ville) et des pattes à entrée verticale (que possèdent généralement les V.T.T. et les vélos de route).

Les unes comme les autres ont leurs avantages et leurs inconvénients, mais elles ne sont pas compatibles (on utilise l'une ou l'autre).

Il est connu par les brevets DE 10200568 et EP 1479602 une patte arrière pour bicyclette, de celles qui permettent l'assemblage des tubes avec les longerons-bases du cadre et qui comportent une rainure où prend appui le moyeu arrière, et qu'elle se compose d'un assemblage formé d'une première pièce qui est assemblée à son tube et longeron-base respectifs et une seconde pièce ayant une première forme et une seconde forme qui s'assemble avec la première pièce et qui est démontable, de sorte que si l'assemblage de la pièce se fait avec la première forme ou avec la seconde forme de la pièce, l'assemblage permet, respectivement, une disposition de la rainure à peu près horizontale ou une disposition de la rainure à peu près verticale se l'utilisation de deux formes pour la seconde pièce a beaucoup d'inconvénients de fabrication, stockage, logistiques, portage pour le cycliste, etc.

L'objet de l'invention est une patte arrière avec une unique forme pour la seconde pièce.

La patte arrière de l'invention est définie selon les termes de la revendication 1.

Pour mieux comprendre l'objet de la présente invention, on a représenté sur les plans des formes préférentielles de réalisation pratique, susceptibles de changements accessoires qui n'en dénaturent pas le fondement.

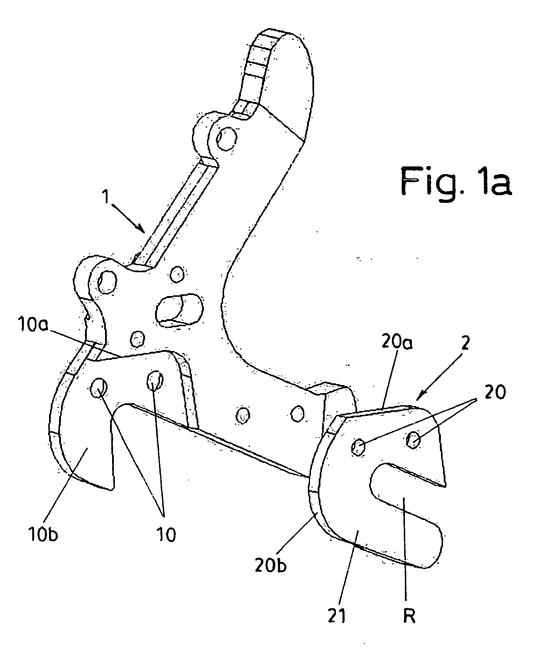

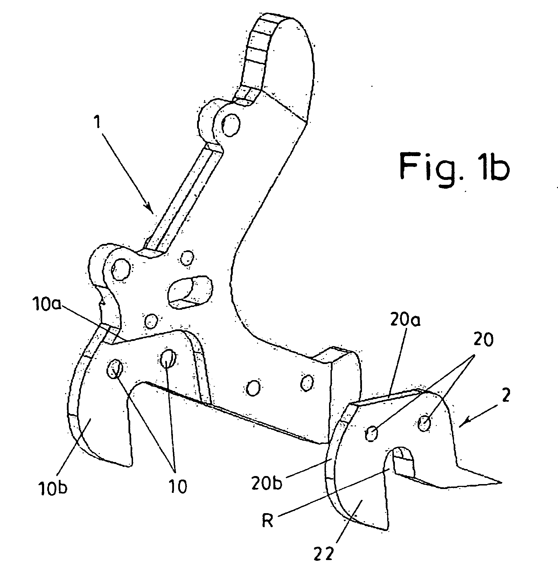

La figure 1 représente une vue schématique en perspective d'une patte arrière pour bicyclette, qui ne relève pas de l'invention, revendiquée où la seconde pièce (2) présente une première forme (21), de sorte que l'assemblage demeure avec une rainure (R) approximativement horizontale -figure 1a- et où la seconde pièce (2) présente une seconde forme (22), de sorte que l'assemblage demeure avec une rainure (R) approximativement verticale -figure 1b-.

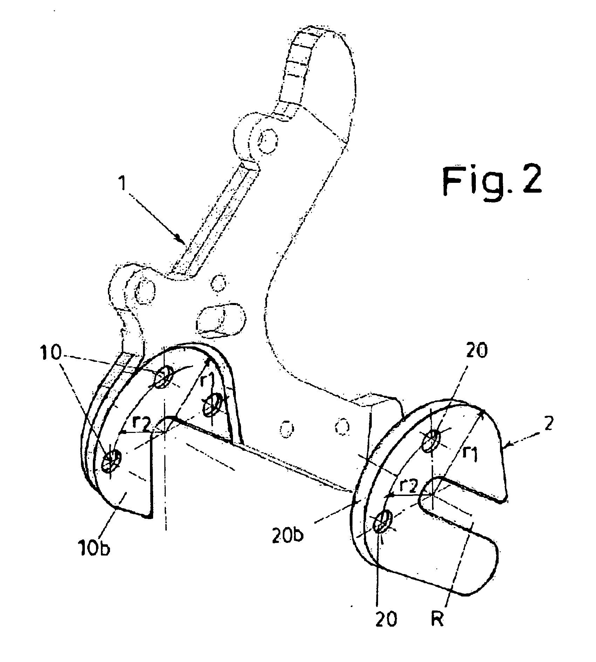

La figure 2 concerne quant à elle la présente invention. Elle représente une vue schématique en perspective similaire à la figure antérieure, où la seconde pièce (2), lesdites première forme (21) et seconde forme (22) sont les mêmes, ce qui permet à la rainure (R) d'être approximativement horizontale ou approximativement verticale en fonction de la position relative entre la première pièce (1) et la seconde pièce (2).

L'objet de la demande est une patte arrière pour bicyclette, de celles qui permettent d'assembler les tubes avec les longerons-bases du cadre et comportent une rainure (R) où prend appui le moyeu arrière.

La patte préconisée se compose d'un assemblage formé d'une première pièce (1) et d'une seconde pièce (2). La première pièce (1) est assemblée à son tube et longeron-base respectifs et la seconde pièce (2) est assemblée à la première pièce (1) et peut en être démontée.

La seconde pièce (2) comporte une première forme (21) et une seconde forme (22), de telle sorte que si l'assemblage entre les pièces (1), (2) se fait avec la première forme (21) -voir figure 1a-l'assemblage comporte une rainure (R) approximativement horizontale et si l'assemblage entre les pièces (1), (2) se fait avec la deuxième forme (22) -voir figure 1b- l'assemblage comporte une rainure (R) approximativement verticale.

L'assemblage démontable entre les pièces (1), (2) a lieu, par exemple, en insérant des vis, des papillons ou des jeux de goujon/écrou dans les paires d'orifices (10), (20) mis préalablement face à face.

Selon la réalisation représentée sur les figures 1a, 1b, qui ne relève pas de l'invention revendiquée, les orifices (10), (20) ont une unique position de montage, grâce à, par exemple, un jeu de chanfreins (10a), (20a) qui contribuent à l'autopositionnement dans un boîtier (10b) s'adaptant au contour extérieur de la pièce (2); en employant des pièces (2) avec une première forme (21) ou avec une seconde forme (22), en fonction de ce que l'on veut pour l'assemblage en résultant, respectivement, une rainure (R) qui est approximativement horizontale ou une rainure (R) approximativement verticale.

Selon la réalisation représentée sur la figure 2, qui concerne l'invention revendiquée, les orifices (10), (20) admettent deux positions de montage, de sorte qu'en fonction de la position de montage d'une même pièce (2) l'assemblage résultant offre une rainure (R) disposée à peu près verticalement ou une rainure (R) disposée à peu près horizontalement.

Dans ce cas, il faut que:
- la seconde pièce (2) présente un contour extérieur en arc de cercle ayant un rayon (r₁) se conjuguant avec le rayon du boîtier (10b), défini sur la première pièce (1), qui a également un contour en arc de cercle.
- les orifices (10), (20) sont contenus dans un arc de cercle théorique ayant un rayon (r₂); constituant, au moins trois orifices (10) dans la première pièce (1) et, au moins, deux orifices (20) dans la seconde pièce (2), de sorte que la rainure (R) soir disposée à peu près horizontalement ou à peu près verticalement, en fonction du fait que les orifices (20) se placent face à l'une ou l'autre paire d'orifices (10).

## Revendications

1. Patte arrière pour bicyclette, permettant l'assemblage des tubes avec les longerons-bases du cadre et comportant une rainure (R) ou vient prendre appui le moyeu arrière, ladite patte se composant d'un assemblage formé d'une première pièce (1) qui est assemblée à son tube et longeron-base respectifs et d'une seconde pièce (2), **caractérisée en ce que**
a) pour l'assemblage démontable les deux pièces (1, 2) ont des orifices (10, 20) mis préalablement face à face qui admettent deux positions de montage;
b) la seconde pièce (2) présente un contour extérieur en arc de cercle ayant un rayon (r₁) se conjuguant avec le rayon d'un boîtier (10b) défini sur la première pièce (1), qui a également un contour en arc de cercle;
c) les orifices (10, 20) sont contenus dans un arc de cercle théorique ayant un rayon (r₂); constituant au moins trois orifices (10) dans la première pièce (1) et au moins deux orifices (20) dans la seconde pièce (2), de sorte que la rainure (R) soit disposée à peu près horizontalement ou à peu près verticalement, en fonction du fait que les orifices (20) de la seconde pièce (2) se placent face à l'une ou l'autre paire d'orifices (10) de la première pièce (1).

## Claims

1. Rear lug for bicycle, of the type that joins the seat stays to the base-bars of the frame and consists of a notch (R) upon which the rear bushing is supported; said lug consists of an assembly formed by a first piece (1) which is joined to its respective seat stay and base-bar and a second piece (2), with the following characteristics:
a) for the dismountable assembly, the two pieces (1, 2) have holes (10, 20) previously positioned facing them which allow two assembly positions;
b) the outer shape of the second piece (2) is arch-circumferential in radius (r₁) combined with the radius of the half-sheave (10b) defined in the first piece (1), which also is of an arch-circumferential shape;
c) the holes (10, 20) are contained in a theoretical arch of circumference of radius (r₂); constituting at least three holes (10) in the first piece(1) and at least two holes (20) in the second piece (2); so that the notch (R) is positioned approximately horizontally or approximately vertically, depending on whether the holes (20) of the second piece (2) are positioned facing one or another pair of holes (10) of the first piece (1).

## Patentansprüche

1. Hinterstütze für Fahrrad, von der Art, die Stangen mit den Grundholmen des Rahmens verbinden und aus einer Nut (R) bestehen, auf der die hintere Spule / Nabe aufliegt; diese Stütze besteht aus einer Baugruppe, die aus einem ersten Teil (1), das mit seiner entsprechenden Stange und Grundholm verbunden ist, und einem zweiten Teil (2) besteht, und sich **dadurch kennzeichnet, dass**
a) im Fall der demontierbaren Baugruppe, die beiden Teile (1, 2) über Bohrungen (10, 20), die ursprünglich gegenüberliegend angebracht wurden und zwei Montagestellungen zulassen, verfügen;
b) das zweite Teil (2) weist eine Kreisbogenaußenkontur mit Radius (r₁) im Zusammenspiel mit dem auf dem ersten Teil (1) definierten Taschenradius (10b), dessen Kontur auch kreisbogenförmig ist, auf;
c) die Bohrungen (10, 20) befinden sich innerhalb eines Sollkreisbogens mit Radius (r₂); indem am ersten Teil (1) mindestens 3 Bohrungen (10) und auf dem zweiten Teil (2) mindestens 2 Bohrungen (20) entstehen; so dass die Nut (R), je nach Anordnung der Bohrungen (20) des zweiten Teils (2) zu einem Paar oder dem anderem Paar der Bohrungen (10) vom ersten Teil (1), ungefähr waagerecht oder ungefähr senkrecht angeordnet steht.
